Europäisches Patentamt

European Patent Office

Office européen des brevets

(19)

(11)    EP 0 731 588 B1

(12)    **FASCICULE DE BREVET EUROPEEN**

(45) Date de publication et mention
de la délivrance du brevet:
**13.07.2005 Bulletin 2005/28**

(51) Int Cl.⁷: **H04L 27/34**, H04L 27/38

(21) Numéro de dépôt: **96460011.8**

(22) Date de dépôt: **11.03.1996**

(54) **Modulateur en phase multi-résolution, pour systèmes multiporteuses**

Phasenmodulation mit mehrfacher Auflösung, für Mehrträgersysteme

Multiresolution phase modulation, for multicarrier systems

(84) Etats contractants désignés:
**DE GB**

(30) Priorité: **10.03.1995 FR 9503024**

(43) Date de publication de la demande:
**11.09.1996 Bulletin 1996/37**

(73) Titulaires:
• **FRANCE TELECOM**
**75015 Paris (FR)**
• **TELEDIFFUSION DE FRANCE S.A.**
**75732 Paris Cedex 15 (FR)**

(72) Inventeurs:
• **Combelles, Pierre**
**35000 Rennes (FR)**
• **Le Floch, Bernard**
**35000 Rennes (FR)**

(74) Mandataire: **Vidon, Patrice**
**Cabinet Vidon**
**16 B, rue Jouanet - B.P. 90333**
**Technopole Atalante**
**35703 Rennes Cedex 7 (FR)**

(56) Documents cités:
**EP-A- 0 617 531          US-A- 3 619 503**

• **BELL SYSTEM TECHNICAL JOURNAL, vol. 50,**
**no. 7, NEW YORK US, pages 2399-2419,**
**XP000567978 SALZ ET AL.: "Data transmission**
**by combined AM and PM"**

**Description**

Le domaine de l'invention est celui de la transmission de signaux numériques vers un ou plusieurs récepteurs. Plus précisément, l'invention concerne les techniques de modulation hiérarchique, consistant à "surmoduler" par un second signal source une fréquence porteuse déjà modulée en phase par un premier signal source.

Un domaine privilégié de l'invention est celui des signaux mettant en oeuvre une pluralité de fréquences porteuses modulées chacune en modulation de phase par le premier signal source. Toutefois, il est clair que l'invention s'applique également, sans restriction, aux signaux monoporteuses, dès lors que la première modulation est une modulation de phase.

Les signaux multiporteuses sont généralement désignés par le terme FDM (Frequency Division Multiplex (multiplex de fréquences)). Un exemple particulier de ces signaux, auquel d'applique notamment l'invention, est les signaux OFDM (Orthogonal Frequency Division Multiplex (multiplexage de fréquences orthogonales))

Un signal OFDM est par exemple utilisé dans le système de diffusion numérique décrit notamment dans le brevet français FR 86 09622 déposé le 2 juillet 1986 et dans le document "Principes de modulation et de codage canal en radiodiffusion numérique vers les mobiles" (M. Alard et R. Lassalle ; Revue de l'UER, n° 224, août 1987, pp. 168-190), et connu sous le nom de système COFDM (Coded Othogonal Frequency Division Multiplex (multiplexage de fréquences orthogonales codées)).

Ce système COFDM a notamment été développé dans le cadre du projet européen DAB (Digital Audio Broadcasting (diffusion audionumérique)). Il est également candidat à la normalisation pour la diffusion terrestre de la télévision numérique.

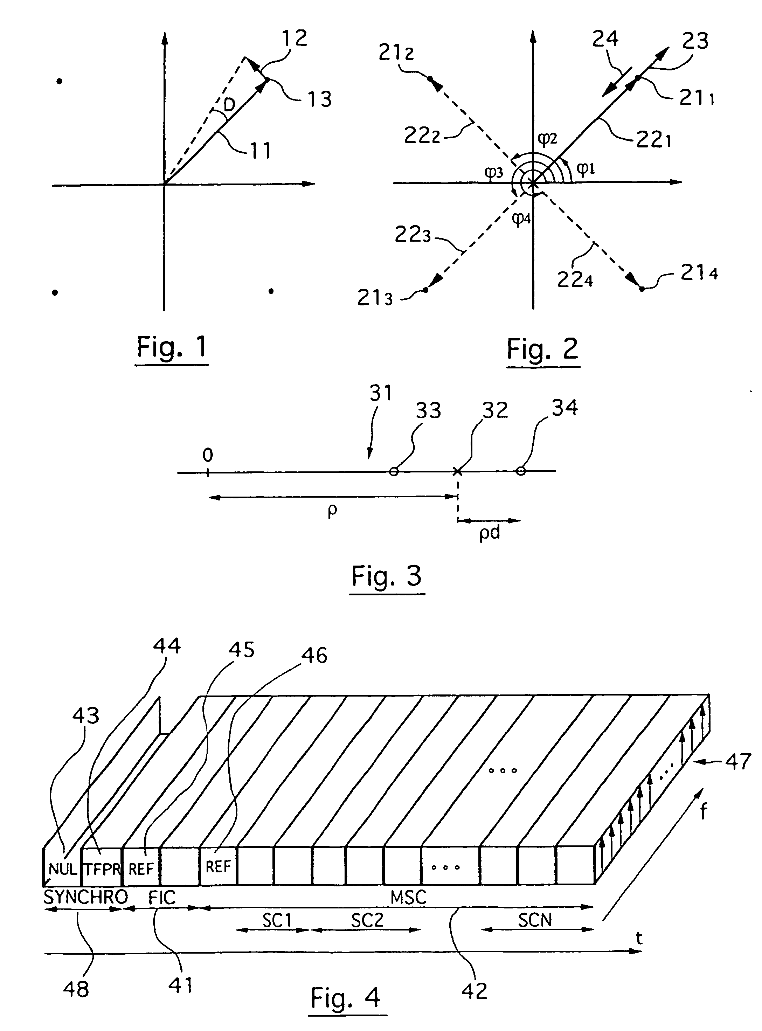

On connaît déjà des techniques de modulation hiérarchique, ou surmodulation Classiquement, ces techniques peuvent être analysées comme des additions de deux modulations successives sur une même fréquence porteuse. En se référant à la figure 1, la première modulation définit un premier vecteur de modulation 11 dont l'amplitude, la fréquence et/ou la phase correspond à une valeur du premier signal source La seconde modulation consiste à ajouter un second vecteur de modulation 12 au premier 11, selon une seconde modulation. En d'autres termes, la seconde modulation est une modulation classique, mais appliquée sur une origine variable 13, correspondant à l'extrémité du premier vecteur 11.

On comprend aisément que la seconde modulation affecte la première, le vecteur résultant des deux modulations ne correspondant forcément pas exactement à une valeur prédéfinie de modulation. L'amplitude de la seconde modulation doit donc être limitée, de façon qu'elle n'entraîne pas une interprétation erronée de la première. En particulier, lorsque la première modulation est une modulation de phase, la seconde induit des décalages de phase D nuisibles à la réception.

En conséquence, ces techniques sont difficilement utilisables dans le cas de canaux de transmission perturbés, par des brouilleurs, des parasites, des échos,... C'est notamment le cas lorsque la première modulation est une modulation de phase. La seconde modulation induit un déphasage intempestif, du point de vue de la première. En particulier, ces techniques ne sont pas utilisables lorsque les perturbations sont du même ordre de grandeur que la seconde modulation. Une autre technique de sumodulation est notamment présentée dans le document EP 0 617 531. Cette technique propose un "allongement" du vecteur à transmettre, an agissant de façon multiplicative sur ce vecteur sans modifier sa phase. La distance entre les états de la constellation est alors augmentée, ce qui diminue le risque d'erreur de décision. Cependant, un inconvénient de cette technique est qu'elle nécessite l'utiliation de techniques complexes de démodulation.

L'invention a notamment pour objectif de pallier ces inconvénients et ces limites de l'état de la technique.

Plus précisément, un objectif de l'invention est de fournir un signal qui permette de transmettre plus d'informations, par rapport aux signaux connus, sans nécessiter une augmentation de sa bande passante, ni une importante augmentation de la sensibilité (donc de la complexité et du coût des récepteurs).

Ainsi, un objectif particulier de l'invention est de fournir une technique permettant de transmettre un signal supplémentaire à un premier signal, sans modification de la bande passante ni des récepteurs conçus pour recevoir le premier signal.

Un autre objectif de l'invention est de fournir une technique permettant une démodulation aisée des signaux source, par rapport aux techniques connues, même en présence de perturbations du canal de transmission.

En conséquence, un objectif de l'invention est de fournir un signal permettant la distinction d'au moins deux types de récepteurs, capables de décoder des données au moins partiellement distinctes mais émises sur la (les) même(s) fréquence(s).

L'invention a également pour objectif de fournir une technique de surmodulation applicable aisément et à faible coût aux signaux multiporteuses. Un objectif particulier de l'invention est ainsi de fournir un tel signal qui soit compatible avec les techniques de diffusion normalisées ou en cours de normalisation, et par exemple le DAB.

Ces objectifs, ainsi que d'autres qui apparaîtront par la suite, sont atteints selon l'invention à l'aide d'un signal destiné à être transmis vers au moins un récepteur, formé d'au moins une fréquence porteuse modulée en modulation de phase par un premier signal source, ladite modulation de phase associant à un élément numérique dudit premier signal source un vecteur de modulation choisi parmi un jeu de vecteurs de modulation prédéterminés ayant un même module de base (m) et des phases différentes,

le module dudit vecteur de modulation étant, au moins à certains instants, modifié en fonction d'un second signal source, la phase de ce vecteur de modulation restant inchangée,

ledit module modifié pouvant alors prendre deux "valeurs de module" (m1 et m2, typiquement m(1+d) et m(1-d)) symétriques par rapport audit module de base (m), "valeurs de module" dont l'affectation est effectuée selon un codage par transition, la valeur de module à l'instant n+1 étant égale à la "valeur de module" à l'instant n si l'élément binaire $a_n$ dudit second signal source à transmettre est égal à une première valeur binaire et à l'autre valeur de module si $a_n$ est égal à une seconde valeur binaire, m étant l'indice du temps.

Ainsi, selon l'invention, on applique une surmodulation sur un signal déjà modulé en phase, mais sans modifier la phase du signal de base. Ainsi, la démodulation en phase n'est pas, ou très peu perturbée. Seul le module du vecteur de modulation est modifié, et l'analyse de ce dernier permet de reconstruire le second signal.

En d'autres termes, la surmodulation de l'invention agit de façon multiplicative sur le vecteur de la première modulation.

Il est à noter que selon l'invention, la seconde modulation ne joue que sur le module du vecteur de modulation. La phase de ce vecteur est, du point de vue de la seconde modulation, quelconque et sans conséquence pour la démodulation.

Plus précisément, on ajoute au vecteur de base un vecteur qui lui est colinéaire, dont le module est fixe (md) mais dont le sens (ou la polarité) peut changer, selon un codage par transition.

De caractéristiques avantageuses d'un tel signal selon la revendication 1 font l'objet de revendication secondaires.

Selon une caractéristique particulière de l'invention, ledit signal peut comprendre une pluralité de fréquences porteuses émises simultanément, au moins certaines desdites fréquences porteuses portant, pendant au moins certaines périodes de temps, un vecteur de modulation dont la phase correspond à ladite première modulation et dont le module est modifié en fonction dudit second signal source.

De façon avantageuse, les éléments de données formant ledit second signal source subissent un codage canal destiné à les protéger contre les erreurs de transmission et/ou un entrelacement en temps et/ou en fréquence.

Préférentiellement, cet entrelacement est identique à celui mis en oeuvre pour le premier signal source, par souci de simplification.

Lorsque ledit signal est organisé en trame de symboles,la modification dudit module en fonction dudit second signal source peut avantageusement être effectuée sélectivement sur certains symboles de ladite trame de symboles et/ou sur certaines desdites fréquences porteuses.

Notamment, les symboles les plus importants peuvent ne pas être surmodulés, afin de garantir une qualité de réception optimale. Plus généralement, le taux de surmodulation (le rapport entre le module de base et le module final) peut être adapté en fonction des informations portées par le premier signal. Ce rapport peut par exemple être choisi entre 0 et 1/4.

Notamment, si ladite trame comprend un entête d'information rapide, ladite modification n'est préférentiellement pas effectuée sur ledit entête.

Par ailleurs, dans le cas des signaux multiporteuses, la sélectivité peut également porter sur l'espace fréquentiel (non surmodulation des fréquences pilotes par exemple).

De façon préférentielle, en particulier lorsqu'un codage par transition est mis en oeuvre, le signal de l'invention comprend régulièrement un symbole de référence, connu des récepteurs, permettant notamment l'initialisation de la modulation dudit second signal source.

L'invention concerne également les dispositifs d'émission d'un tel signal. Selon un mode de réalisation particulier, ils peuvent comprendre des moyens de calcul d'un vecteur de modulation $x_n = (1 \pm d).z_n$, où :

$z_n$ est le signal modulé dudit premier signal source ;
$\pm d$ est une valeur correspondant au codage par transition des éléments binaires formant ledit second signal source.

L'invention concerne encore les récepteurs du signal de l'invention. Il apparaît clairement que ce signal permet de définir au moins trois types de récepteurs, selon qu'ils sont prévus pour recevoir le premier ou le second signal source, ou les deux.

Dans le cas de récepteurs recevant le second signal source, ils peuvent par exemple comprendre des moyens d'extraction du module $\alpha_n$ de chacun desdits vecteurs de modulation et des moyens d'analyse dudit module $\alpha_n$, délivrant des estimations des éléments binaires dudit second signal source.

Il peut notamment s'agir de moyens de comparaison de la différence $|\alpha_n - \alpha_{n-1}|$ à un seuil S. Avantageusement, ledit seuil S est égal à $\rho d$, où $\rho$ représente une estimation de l'atténuation du canal, $\rho$ peut être pris égal à $\alpha_n$.

Les applications de l'invention sont très nombreuses, le premier signal source peut être par exemple un signal (ou plusieurs) sonore (DAB), un signal de télévision, un signal de données, ou plus généralement tout multiplex de ces signaux.

Le second signal source peut également être quelconque. Il peut être complètement indépendant (données de radiocommunication ou données de contrôle,...) ou être un complément au premier signal (commentaires ou images accompagnant un signal de radiodiffusion, sous-titrage, données permettant d'améliorer la qualité du premier signal, etc...). Il est même envisageable que le premier et le second signaux forment deux sous-ensembles d'un unique signal.

D'autres caractéristiques et avantages de la présente invention apparaîtront à la lecture de la description suivante d'un mode de réalisation préférentiel de la présente invention, et des dessins annexés, dans lesquels :

- la figure 1 illustre une technique connue de surmodulation, déjà discutée précédemment;
- la figure 2 présente un signal selon l'invention, portant un premier signal source modulé en phase, et un second signal source agissant sur le module du vecteur de modulation ;
- la figure 3 illustre le principe de la démodulation du second signal source de la figure 2 ;
- la figure 4 illustre un signal multiporteuse, dont chaque fréquence porteuse peut être modulée selon la technique illustrée en figure 2 ;
- la figure 5 est un synoptique général d'un dispositif d'émission d'un signal selon les figures 2 ou 4 ;
- les figures 6 et 7 illustrent deux modes de réalisation particuliers des moyens de modulation du dispositif de la figure 5 ;
- la figure 8 est un schéma synoptique d'un récepteur d'un signal selon les figures 2 ou 4.

Comme indiqué précédemment, le signal de l'invention permet de transmettre simultanément deux signaux source à l'aide d'une seule fréquence :

- un premier signal source (correspondant à une première modulation) modulant en phase cette fréquence porteuse ;
- un second signal source (correspondant à une deuxième modulation ou surmodulation) modifiant le module du vecteur correspondant à la première modulation, mais conservant sa phase intacte.

Bien sûr, cette approche peut être aisément généralisée à des signaux multiporteuses.

La figure 2 illustre le principe de l'invention, dans le cas d'une première modulation à 4 états de phase (MDP4) et d'une seconde modulation à deux états.

La modulation MDP4 est notamment utilisée pour le système DAB.

Classiquement, une modulation de phase est basée sur une constellation d'états possibles $21_1$ à $21_4$, correspondant chacun à un vecteur de modulation $22_1$ à $22_4$ ayant un même module am mais des phases $\varphi_1$ à $\varphi_4$ différentes.

La seconde modulation consiste à ajouter au premier vecteur $22_1$ un second vecteur (23 ou 24) qui lui est colinéaire Selon une autre approche, elle consiste à appliquer un coefficient multiplicateur au module du vecteur 22 . Ce coefficient vaudra par exemple 1+d ou 1-d, dans le cas d'une surmodulation à deux états d est préférentiellement très inférieur à 1 pour limiter l'effet de la surmodulation par rapport à la première modulation.

Selon un mode de réalisation avantageux, le second signal source est codé à l'aide d'un codage par transition. Le signal de sur-modulation est alors défini de la manière suivante : $a_n$ (n étant l'indice du temps) désignant le signal de données, la polarité du module md vecteur de sur-modulation (de) de la figure 1 ne sera pas modifiée entre l'instant n et n+1 si $a_n = 0$ et sera inversée si $a_n = 1$. Cette technique nécessite préférentiellement la présence d'un symbole dédié d'initialisation du codage par transition.

Ainsi, il apparaît clairement que la surmodulation n'induit aucune modification, même minime, de la phase. La perturbation produite est donc faible.

Bien sûr, l'invention peut être généralisée aux autres modulations de phase $2^m$ (m entier) connues (par exemple à 8, 16, 32 et plus généralement états). Par ailleurs, la surmodulation peut prendre plus de deux états, en affectant à chaque état un coefficient multiplicateur distinct.

Les démodulations de chacun des deux signaux source sont aisées et peuvent être effectuées indépendamment. La démodulation du premier signal source est une démodulation de phase classique. Le principe de la démodulation du second signal source est illustré par la figure 3.

On extrait le module 31 du vecteur reçu ("mise à plat" de ce vecteur), on repère la base 32 de la surmodulation (ce qui revient à soustraire le module m du vecteur de base), puis on recherche le point de la constellation surimposée le plus probable, parmi les points possibles 33, 34.

Selon une autre approche, la démodulation peut consister à comparer directement le module reçu avec les modules possibles m(1+d) et m(1-d).

Dans la pratique, le module reçu est atténué d'un facteur $\rho$, dont la prise en compte est décrite par la suite.

Comme indiqué précédemment, l'invention permet de définir des signaux multiporteuses, dont chaque fréquence porteuse porte les deux modulations décrites. Par exemple, l'invention permet de transmettre un signal source surmodulé sur un signal de type DAB, tel que normalisé.

La figure 4 donne un exemple d'un tel signal. Plus précisément, cette figure illustre une trame d'un signal organisé selon la norme DAB.

Cette trame comprend un canal de synchronisation 48, suivi d'un entête, ou "canal d'information rapide" (FIC) 41 et un canal principal MSC 42, qui peut être organisé en plusieurs sous-canaux indépendants SC1 à SCN.

Classiquement, le canal de synchronisation comprend un symbole blanc de synchronisation 43, un symbole de synchronisation temporelle et fréquentielle 44 (TFPR). Le canal FIC est constitué d'un ensemble de symboles de données, par exemple pour décrire la structure de la trame. Selon une caractéristique avantageuse de l'invention, le FIC comprend encore un symbole 45 de référence pour la démodulation du second signal, notamment si celui-ci est codé par transition comme décrit plus haut.

Du fait de l'importance de cet entête (FIC), il est souhaitable qu'elle ne porte pas de surmodulation, celle-ci étant réservée au MSC. Dans ce cas, le symbole de référence est placé (46) au début du MSC (les positions 45 et 46 sont des alternatives). Si nécessaire, elle peut également être mise en oeuvre de façon sélective, en fonction des canaux. Par exemple, si le canal SC2 contient des données essentielles, dont aucune ne doit manquer, on évitera de lui appliquer une surmodulation. Il est à noter que cette méthode peut également être appliquée aux signaux monoporteuses.

La même approche peut être prise sur le plan fréquentiel : certaines fréquences porteuses peuvent être, au moins à certains instants, non surmodulées. Cela peut par exemple être le cas des fréquences porteuses portant des pilotes de référence de fréquence, ou de fréquences porteuses systématiquement perturbées.

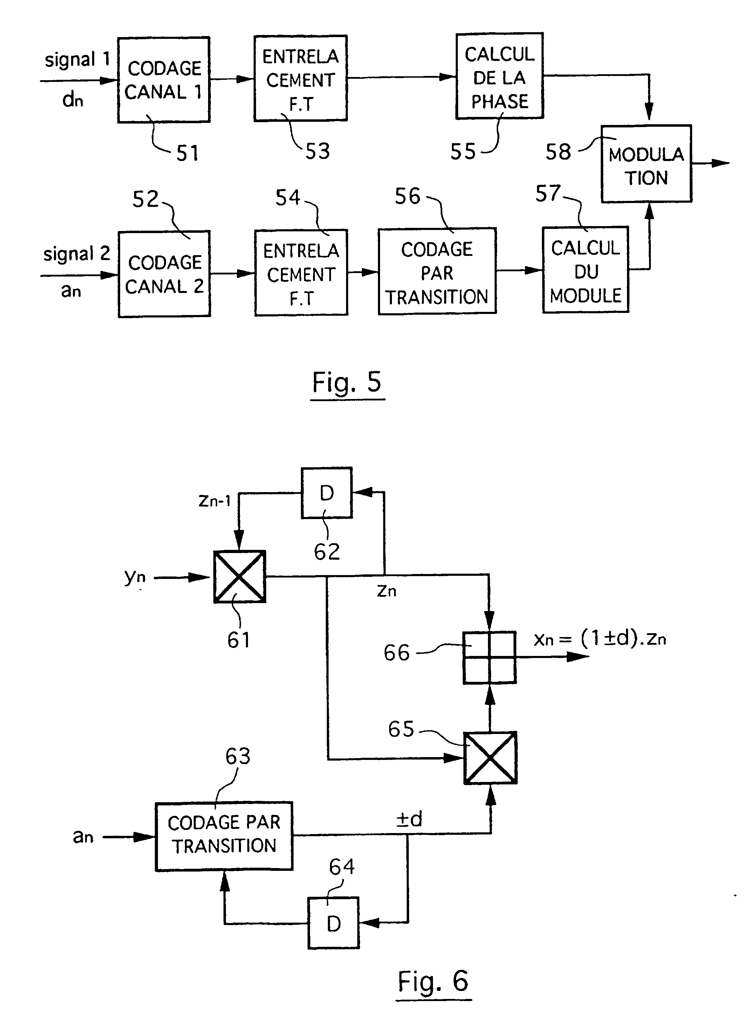

La figure 5 présente un synoptique d'un dispositif d'émission d'un tel signal.

Ce dispositif reçoit en entrée deux signaux source $y_n$ et $a_n$ à transmettre. Ces deux signaux source peuvent être complètement indépendants, concerner la même application (signal de base et signal complémentaire par exemple) ou encore être deux sous-ensembles d'un même signal source.

Par exemple, le signal peut être le signal source DAB de type connu, et le signal $a_n$ peut être un $y_n$ flux de données binaires quelconque Chaque signal subit un codage canal 51, 52 spécifique, adapté au signal source, puis, éventuellement, un entrelacement en temps et/ou en fréquence 53, 54. Dans ce dernier cas, il est avantageux pour limiter la complexité des récepteurs communs aux deux signaux, que les entrelacements 53, 54 soient les mêmes.

On détermine ensuite la phase (55) à appliquer à chaque fréquence porteuses, en fonction du premier signal source. Parallèlement, on effectuée un codage par transition (56) des éléments numériques du second signal, puis on détermine le module (57) à appliquer pour la surmodulation.

La fréquence porteuse est alors modulée (58) avec cette phase et ce module.

On décrit maintenant plus précisément deux façons de réaliser cette modulation

On considère la modulation différentielle du signal DAB (voir Final Draft prETS 300401, subclause 14.7, p. 171) définie par la relation : $z_n = z_{n-1} \cdot y_n$, où :

- n est l'indice du temps (l'indice des fréquences étant omis),
- $y_n$ désigne le premier signal de données prenant une des quatre valeurs $1/\sqrt{2}$ ($\pm 1 \pm i$),
- $z_n$ désigne le signal émis à l'instant n supposé de module unitaire.

A ce signal est superposé, par addition complexe, le signal de surmodulation défini précédemment, de valeur $\pm d.z_n$, pour former le signal émis $x_n = (1 \pm d) z_n$.

Un premier mode de réalisation d'un modulateur correspondant est illustré en figure 6.

Les valeurs $y_n$ alimentent un multiplieur 61, recevant également les valeurs $z_{n-1}$, pour former les valeurs $z_n$. Celle-ci est retardée (62) de la durée D d'un symbole, pour fournir la valeur $z_{n-1}$.

Dans le même temps, les valeurs $a_n$ du second signal source sont reçues dans un codeur par transition 63, qui délivre les valeurs $\pm d$. Un second retard D 64 délivre au codeur 63 la valeur précédente.

Un multiplieur 65 effectue le produit $\pm d\, z_n$ (on constate donc que la phase est celle imposée par le premier signal source Le second signal source n'influence en aucune manière celle-ci). Ensuite, un additionneur 66 additionne $z_n$ et $d\, z_n$ pour produire le signal à émettre :

$$x_n = (1 \pm d).z_n$$

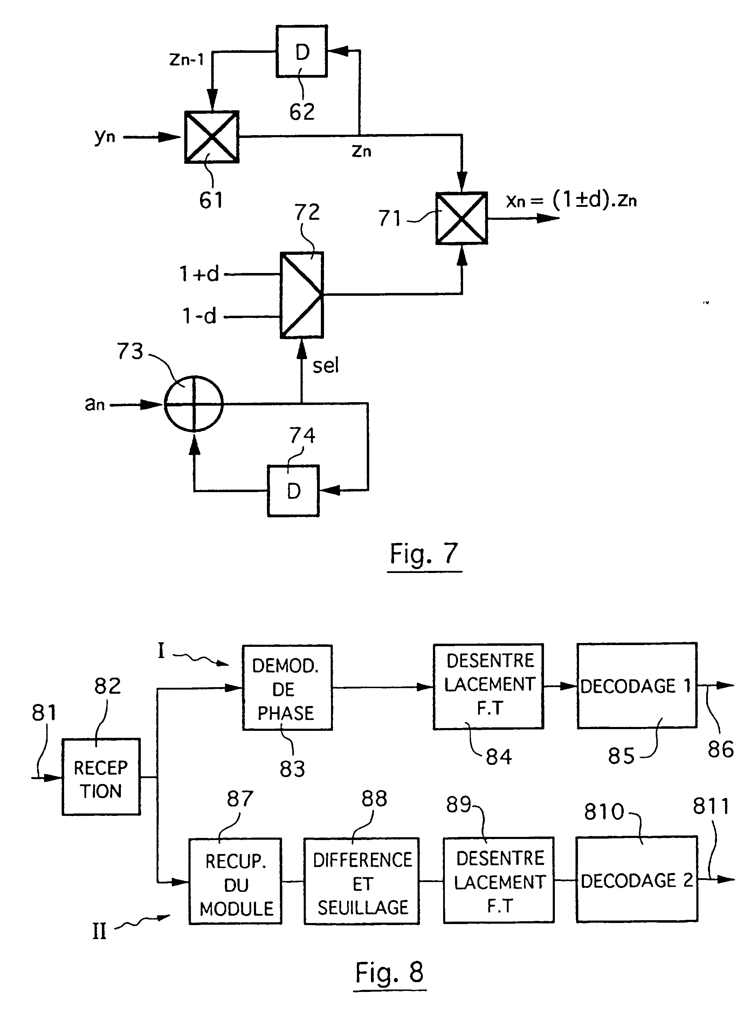

La figure 7 présente une autre technique pour produire ce signal $x_n$. Les valeurs $z_n$ sont obtenues de la même façon que dans le cas de la figure 5, à l'aide d'un multiplieur 61 et d'un retard 62.

Un multiplieur 71 effectue le produit entre $z_n$ et 1+d ou 1-d pour fournir $x_n$. Ces deux dernières données sont délivrées par un sélecteur 72 piloté par une donnée binaire "sel" correspondant au codage par transition de $a_n$. A nouveau, on constate que la seconde modulation n'agit que sur le module du vecteur de modulation. Plus précisément, "sel" est égal à la somme (modulo 2) 73 de $a_n$ et de la sortie du retard 74.

La figure 8 est un synoptique d'un mode de réalisation d'un récepteur du signal émis par les dispositifs des figures 6 et 7, prévu pour recevoir les deux signaux source.

Le signal reçu 81 est classiquement ramené (82) en bande de base et filtré. Dans le cas d'un signal multiporteuse, chaque fréquence porteuse est extraite, par exemple à l'aide d'une transformation de Fourner (FFT).

Chaque porteuse est ensuite traitée dans deux chaînes distinctes.

La chaîne I effectue classiquement une démodulation de phase 83, le désentrelacement 84 (si le signal a été entrelacé à l'émission) puis le décodage 85 permettant de reconstituer une estimation 86 du premier signal source.

La chaîne II est spécifique à la réception du signal surmodulé selon l'invention. On récupère (87) le module du vecteur de modulation, puis on compare (88) ce module avec un ou plusieurs seuils (en fonction de la surmodulation utilisée). Ces seuils tiennent compte, bien sûr, de l'atténuation $\rho$ du canal sur chaque symbole.

En effet, le signal reçu a pour module $\alpha = \rho\,(1 \pm d)$, $\rho$ désignant l'atténuation du canal sur le symbole considéré, comme illustré en figure 3.

Le démodulateur doit donc réaliser l'opération ($|\alpha_n-\alpha_{n-1}|$-S), ou S représente un seuil qui idéalement devrait être égal à $\rho$d Or $\rho$ n'est pas connu, il faudrait estimer le canal pour le connaître. On fait donc l'appioximation $\rho=\alpha_n$. Le seuil S vaut donc $d\alpha_n$. Cette opération est décrite dans le tableau suivant :

| $a_n$ | $\|x_{n-1}\|$ | $\|x_n\|$ | $\|\alpha_n-\alpha_{n-1}\|$ | S | $(\|\alpha_n-\alpha_{n-1}\|$-S$)$ |
|---|---|---|---|---|---|
| 0 | 1-d | 1-d | 0 | $\rho$d(1-d) | -$\rho$d(1-d) |
| 0 | 1+d | 1+d | 0 | $\rho$d(1+d) | -$\rho$d(1+d) |
| 1 | 1-d | 1+d | 2 $\rho$d | $\rho$d(1+d) | $\rho$d(1-d) |
| 1 | 1+d | 1-d | 2 $\rho$d | $\rho$d(1-d) | $\rho$d(1+d) |

On réalise ensuite, si nécessaire, le désentrelacement 89, puis le décodage 810 fournissant une estimation 811 du second signal source.

Si la surmodulation est émise sélectivement, le récepteur connaît, soit dès l'origine, soit par une diffusion régulière d'informations, les emplacements et/ou les instants de transmission correspondants.

Comme déjà indiqué, le signal de l'invention permet de réaliser plusieurs types de récepteurs. Notamment, si les signaux source sont tout à fait indépendants, il est possible de créer :

- des récepteurs comprenant la chaîne I (par exemple des récepteurs DAB classiques) ;
- des récepteurs comprenant seulement la chaîne II (par exemple des récepteurs de radiomessagerie ("paging"));
- des récepteurs comprenant les deux chaînes I et II.

Si les signaux source sont liés, le premier signal source étant un signal de base et le second un signal complémentaire, on peut prévoir deux niveaux de qualité de récepteurs :

- un premier niveau comprenant la chaîne I (récepteurs classiques) ;
- un second niveau comprenant les deux chaînes I et II pour fournir un signal de qualité supérieur, à partir des deux signaux source.

**Revendications**

1. Signal destiné à être transmis vers au moins un récepteur, formé d'au moins une fréquence porteuse modulée en modulation de phase par un premier signal source, ladite modulation de phase associant à un élément numérique dudit premier signal source un vecteur de modulation choisi parmi un jeu de vecteurs de modulation prédéterminés ($21_1$ à $21_4$) ayant un même module de base (m) et des phases différentes,
**caractérisé en ce que**, au moins à certains instants, le module dudit vecteur de modulation est modifié en fonction d'un second signal source, la phase de ce vecteur de modulation restant inchangée,
le module modifié pouvant alors prendre deux « valeurs de module » (m1 et m2) symétriques par rapport audit module de base (m), « valeurs de module » dont l'affectation est effectuée selon un codage par transition (63), la

« valeur de module » à l'instant n+1 étant égale à la « valeur de module » (m1) à l'instant n si l'élément binaire $a_n$ dudit second signal source à transmettre est égal à une première valeur binaire et à l'autre desdites « valeurs de module » (m2) si $a_n$ est égal à une seconde valeur binaire, n étant l'indice du temps.

2. Signal selon la revendication 1, **caractérisé en ce qu'**il comprend une pluralité de fréquences porteuses (47) émises simultanément, au moins certaines desdites fréquences porteuses portant pendant au moins certaines périodes de temps un vecteur de modulation dont la phase correspond à ladite première modulation et dont le module de base est modifié en fonction dudit second signal source.

3. Signal selon l'une quelconque des revendications 1 à 2, **caractérisé en ce que** les éléments de données formant ledit second signal source subissent un codage correcteur d'erreurs (52) et/ou un entrelacement en temps et/ou en fréquence (54).

4. Signal selon la revendication 3, **caractérisé en ce que** lesdits premier et second signaux source subissent des entrelacements en temps et/ou en fréquence identiques (53, 54).

5. Signal selon l'une quelconque des revendications 1 à 4, **caractérisé en ce que** ledit signal est organisé en trame de symboles, et **en ce que** la modification dudit module en fonction dudit second signal source est effectuée sélectivement sur certains symboles de ladite trame de symboles et/ou sur certaines desdites fréquences porteuses.

6. Signal selon la revendication 5, **caractérisé en ce que** ladite trame comprend un entête d'information rapide (FIC), et **en ce que** ladite modification n'est pas effectuée sur ledit entête.

7. Signal selon l'une quelconque des revendications 1 à 6, **caractérisé en ce qu'**il comprend régulièrement un symbole de référence (45, 46), connu des récepteurs, permettant notamment l'initialisation de la modulation dudit second signal source.

8. Dispositif d'émission d'un signal destiné à être transmis vers au moins un récepteur, le dispositif étant capable de former ledit signal a partir d'au moins une fréquence porteuse modulée en modulation de phase par un premier signal source, ladite modulation de phase associant à un élément numérique dudit premier signal source un vecteur de modulation choisi parmi un jeu de vecteurs de modulation prédéterminés ($21_1$ à $21_4$) ayant un même module de base (m) et des phases différentes,
**caractérisé en ce qu'**il comprend des moyens de modification du module dudit vecteur de modulation en fonction d'un second signal source, la phase de ce vecteur de modulation restant inchangée,
le module modifié pouvant alors prendre deux « valeurs de module » (m1 et m2) symétriques par rapport audit module de base (m), « valeurs de module » dont l'affectation est effectuée selon un codage par transition (63), la « valeur de module » à l'instant n+1 étant égale à la « valeur de module » (m1) à l'instant n si l'élément binaire $a_n$ dudit second signal source à transmettre est égal à une première valeur binaire et à l'autre desdites « valeurs de module » (m2) si $a_n$ est égal à une seconde valeur binaire, n étant l'indice du temps.

9. Dispositif d'émission d'un signal selon la revendication 8,
**caractérisé en ce qu'**il comprend des moyens de calcul d'un vecteur de modulation $x_n = (1 \pm d).z_n$, où :

$z_n$ est un signal modulé représentant ledit premier signal source ;
d est une valeur prédéterminée comprise strictement entre 0 et 1.

10. Récepteur d'un signal formé d'au moins une fréquence porteuse modulée en modulation de phase par un premier signal source, ladite modulation de phase associant à un élément numérique dudit premier signal source un vecteur de modulation choisi parmi un jeu de vecteurs de modulation prédéterminés ($21_1$ à $21_4$) ayant un même module de base (m) et des phases différentes,
le module dudit vecteur de modulation étant modifié en fonction d'un second signal source, au moins à certains instants, la phase de ce vecteur de modulation restant inchangée,
le module modifié pouvant prendre deux « valeurs de module » (m 1 et m2) symétriques par rapport audit module de base (m), « valeurs de module » dont l'affectation est effectuée selon un codage par transition (63), la valeur de module à l'instant n+1 étant égale à la « valeur de module » (m1) à l'instant n si l'élément binaire $a_n$ dudit second signal source à transmettre est égal à une première valeur binaire et à l'autre desdites « valeurs de module » (m2) si $a_n$ est égal à une seconde valeur binaire, n étant l'indice du temps,

**caractérisé en ce qu'**il comprend des moyens (87) d'extraction du module $\alpha_n$ de chacun desdits vecteurs de modulation et des moyens (88) d'analyse dudit module $\alpha_n$, délivrant des estimations des éléments binaires dudit second signal source.

11. Récepteur selon la revendication 10, **caractérisé en ce que** lesdits moyens d'analyse comprennent des moyens (88) de comparaison de la différence $|\alpha_n - \alpha_{n-1}|$ à un seuil S.

12. Récepteur selon la revendication 11, **caractérisé en ce que** ledit seuil S est égal à rd, où r représente une estimation de l'atténuation du canal.

13. Récepteur selon la revendication 12, **caractérisé en ce que** r est égal à $\alpha_n$.


**Patentansprüche**

1. Signal, das zu mindestens einem Empfänger gesendet werden soll, bestehend aus mindestens einer durch ein erstes Quellensignal phasenmodulierten Trägerfrequenz, wobei diese Phasenmodulierung einem numerischen Element des ersten Quellensignals einen Modulationsvektor zuordnet, der unter einem Satz von Vektoren vorgegebener Modulation ($21_1$ bis $21_4$) gewählt wird, die ein selbes Basismodul (m) und verschiedene Phasen aufweisen,
   **dadurch gekennzeichnet, dass** zu mindestens einigen Zeitpunkten das Modul dieses Modulationsvektors als Funktion eines zweiten Quellensignals geändert wird, wobei die Phase dieses Modulationsvektors unverändert bleibt,
   wobei das geänderte Modul dann zwei gegenüber dem Basismodul (m) symmetrische "Modulwerte" (m1 und m2) annehmen kann, "Modulwerte", deren Zuordnung nach einer Übergangscodierung (63) erfolgt, wobei der "Modulwert" zum Zeitpunkt n+1 dem "Modulwert" (m1) zum Zeitpunkt n gleicht, wenn das Binärelement $a_n$ des zweiten zu sendenden Quellensignals einem ersten Binärwert gleicht und dem anderen der "Modulwerte" (m2) gleich ist, wenn $a_n$ einem zweiten Binärwert gleicht, wobei n der Zeitindex ist.

2. Signal nach Anspruch 1,
   **dadurch gekennzeichnet, dass** es eine Vielzahl von gleichzeitig gesendeten Trägerfrequenzen (47) umfasst, wobei mindestens einige dieser Trägerfrequenzen während zumindest einiger Zeitperioden einen Modulationsvektor tragen, dessen Phase der besagten ersten Modulation entspricht und dessen Basismodul als Funktion des zweiten Quellensignals geändert wird.

3. Signal nach einem der Ansprüche 1 bis 2,
   **dadurch gekennzeichnet, dass** die Datenelemente, welche das zweite Quellensignal bilden, eine Fehlerkorrektur-Codierung (52) und/oder eine Verschachtelung nach Zeit und/oder Frequenz (54) erfahren.

4. Signal nach Anspruch 3,
   **dadurch gekennzeichnet, dass** das erste und das zweite Quellensignal identische Verschachtelungen nach Zeit und/oder Frequenz (53, 54) erfahren.

5. Signal nach einem der Ansprüche 1 bis 4,
   **dadurch gekennzeichnet, dass** das besagte Signal nach Symbolblöcken organisiert ist und dass die Änderung des besagten Moduls als Funktion des zweiten Quellensignals selektiv über bestimmte Symbole des Symbolblocks und/oder über einige der erwähnten Trägerfrequenzen erfolgt.

6. Signal nach Anspruch 5,
   **dadurch gekennzeichnet, dass** der erwähnte Block einen schnellen Informationskopf (FIC) umfasst und dass die besagte Änderung nicht auf diesen Kopf erfolgt.

7. Signal nach einem der Ansprüche 1 bis 6,
   **dadurch gekennzeichnet, dass** es regelmäßig ein von den Empfängern bekanntes Referenzsymbol (45, 46) umfasst, das insbesondere die Initialisierung der Modulation des zweiten Quellensignals ermöglicht.

8. Vorrichtung zum Senden eines Signals, das zu mindestens einem Empfänger übertragen werden soll, wobei die Vorrichtung in der Lage ist, dieses Signal zu bilden, ausgehend von mindestens einer von einem ersten Quellensignal phasenmodulierten Trägefrequenz, wobei diese Phasenmodulierung einem numerischen Element des ersten Quellensignals einen Modulationsvektor zuordnet, der unter einem Satz von Vektoren vorgegebener Modulation ($21_1$ bis $21_4$) gewählt wird, die ein selbes Basismodul (m) und verschiedene Phasen aufweisen,
**dadurch gekennzeichnet, dass** diese Vorrichtung über Mittel zum Ändern des Moduls des besagten Modulationsvektors als Funktion eines zweiten Quellensignals verfügt, wobei die Phase dieses Modulationsvektors unverändert bleibt, wobei das geänderte Modul dann zwei gegenüber dem Basismodul (m) symmetrische "Modulwerte" (m1 und m2) annehmen kann, "Modulwerte", deren Zuordnung nach einer Übergangscodierung (63) erfolgt, wobei der "Modulwert" zum Zeitpunkt n+1 dem "Modulwert" (m1) zum Zeitpunkt n gleicht, wenn das Binärelement an des zweiten zu sendenden Quellensignals einem ersten Binärwert gleicht und dem anderen der "Modulwerte" (m2) gleich ist, wenn $a_n$ einem zweiten Binärwert gleicht, wobei n der Zeitindex ist.

9. Vorrichtung zum Senden eines Signals nach Anspruch 8,
**dadurch gekennzeichnet, dass** sie Mittel zum Berechnen eines Modulationsvektors $x_n = (1 \pm d) \cdot z_n$ umfasst, wobei:

$z_n$ ein moduliertes Signal ist, welches das erste Quellensignal darstellt;
d ein streng zwischen 0 und 1 liegender, vorgegebener Wert ist.

10. Empfänger eines Signals, das aus mindestens einer von einem ersten Quellensignal phasenmodulierten Tragerfrequenz gebildet wird, wobei diese Phasenmodulierung einem numerischen Element des ersten Quellensignals einen Modulationsvektor zuordnet, der unter einem Satz von Vektoren vorgegebener Modulation ($21_1$ bis $21_4$) gewählt wird, die ein selbes Basismodul (m) und verschiedene Phasen aufweisen,
wobei zu mindestens einigen Zeitpunkten das Modul dieses Modulationsvektors als Funktion eines zweiten Quellensignals geändert wird, wobei die Phase dieses Modulationsvektors unverändert bleibt,
wobei das geänderte Modul dann zwei gegenuber dem Basismodul (m) symmetrische "Modulwerte" (m1 und m2) annehmen kann, "Modulwerte", deren Zuordnung nach einer Übergangscodierung (63) erfolgt, wobei der "Modulwert" zum Zeitpunkt n+1 dem "Modulwert" (m1) zum Zeitpunkt n gleicht, wenn das Binärelement $a_n$ des zweiten zu sendenden Quellensignals einem ersten Binärwert gleicht und dem anderen der "Modulwerte" (m2) gleich ist, wenn an einem zweiten Binärwert gleicht, wobei n der Zeitindex ist,
**dadurch gekennzeichnet, dass** es Mittel (87) zum Extrahieren des Moduls $\alpha_n$ aus jedem der besagten Modulationsvektoren sowie Mittel (88) zum Analysieren dieses Moduls $\alpha_n$ umfasst, welche Schätzungen der Binärelemente des erwähnten zweiten Quellensignals liefert.

11. Empfänger nach Anspruch 10,
**dadurch gekennzeichnet, dass** die Mittel zum Analysieren Mittel (88) zum Vergleichen der Differenz $|\alpha_n - \alpha_{n-1}|$ mit einem Schwellenwert S umfassen.

12. Empfänger nach Anspruch 11,
**dadurch gekennzeichnet, dass** der Schwellenwert S gleich rd ist, wobei r eine Schätzung der Kanaldämpfung darstellt.

13. Empfänger nach Anspruch 12,
**dadurch gekennzeichnet, dass** r gleich $\alpha_n$ ist.

**Claims**

1. Signal which is intended to be transmitted to at least one receiver, formed of at least one carrier frequency which is modulated by phase modulation by a first signal source, the said phase modulation associating with a digital element of the said first source signal a modulation vector which is chosen from a set of predetermined modulation vectors ($21_1$ to $21_4$) having the same base modulus (m) and different phases,
**characterized in that**, at least at certain instants, the modulus of the said modulation vector is modified as a function of a second signal source, the phase of this modulation vector remaining unchanged,
the modified modulus then being able to take two "modulus values" (m1 and m2) which are symmetrical relative to the said base modulus (m), and which are assigned according to an encoding by transition (63), the modulus value at instant n+1 being equal to the "modulus value" (m1) at instant n if the binary element $a_n$ of the said second source signal to be transmitted is equal to a first binary value, and to the other of the said "modulus values" (m2) if $a_n$ is equal to a second binary value, n being the time index.

2. Signal according to Claim 1, **characterized in that** it comprises multiple carrier frequencies (47) which are emitted simultaneously, at least some of the said carrier frequencies carrying, at least during certain time periods, a modulation vector of which the phase corresponds to the said first modulation and of which the base modulus is modified as a function of the said second source signal.

3. Signal according to either of Claims 1 to 2, **characterized in that** the data elements forming the said second source signal undergo error-correction encoding (32) and/or interlacing in time and/or frequency (54).

4. Signal according to Claim 3, **characterized in that** the said first and second signals undergo identical interlacing in time and/or frequency (53, 54).

5. Signal according to any of Claims 1 to 4, **characterized in that** the said signal is organised in a frame of symbols, and **in that** the modification of the said modulus as a function of the said second signal source is carried out selectively on certain symbols of the said frame of symbols and/or on certain of the said carrier frequencies.

6. Signal according to Claim 5, **characterized in that** the said frame includes a fast information header (FIC), and **in that** the said modification is not carried out on the said header.

7. Signal according to any of Claims 1 to 6, **characterized in that** it regularly includes a reference symbol (45, 46), which is known to the receivers, and which in particular makes it possible to initialise the modulation of the said second signal source.

8. Device to emit a signal which is intended to be transmitted to at least one receiver, the device being capable of forming the signal from at least one carrier frequency which is modulated by phase modulation by a first signal source, the said phase modulation associating with a digital element of the said first source signal a modulation vector which is chosen from a set of predetermined modulation vectors ($21_1$ to $21_4$) having the same base modulus (m) and different phases,
**characterized in that** it includes means of modifying the modulus of the said modulation vector as a function of a second signal source, the phase of this modulation vector remaining unchanged,
the modified modulus then being able to take two "modulus values" (m1 and m2) which are symmetrical relative to the said base modulus (m), and which are assigned according to an encoding by transition (63), the "modulus value" at instant n+1 being equal to the "modulus value" (m1) at instant n if the binary element $a_n$ of the said second source signal to be transmitted is equal to a first binary value, and to the other of the said "modulus values" (m2) if $a_n$ is equal to a second binary value, n being the time index.

9. Device to emit a signal according to Claim 8,
**characterized in that** it includes means of calculating a modulation vector $x_n = (1 \pm d) \cdot z_n$, where:

$z_n$ is a modulated signal representing the said first signal source;
d is a predetermined value strictly between 0 and 1.

10. Receiver of a signal which is formed from at least one carrier frequency which is modulated by phase modulation by a first signal source, the said phase modulation associating with a digital element of the said first source signal a modulation vector which is chosen from a set of predetermined modulation vectors ($21_1$ to $21_4$) having the same base modulus (m) and different phases,
the modulus of the said modulation vector being modified as a function of a second signal source, at least at certain instants, the phase of this modulation vector remaining unchanged,
the modified modulus being able to take two "modulus values" (m1 and m2) which are symmetrical relative to the said base modulus (m), and which are assigned according to an encoding by transition (63), the "modulus value" at instant n+1 being equal to the "modulus value" (m1) at instant n if the binary element $a_n$ of the said second source signal to be transmitted is equal to a first binary value, and to the other of the said "modulus values" (m2) if $a_n$ is equal to a second binary value, n being the time index,
**characterized in that** it includes means (87) of extracting the modulus _n from each of the said modulation vectors, and means (88) of analysing the said modulus _n, supplying estimates of the binary elements of the said second signal source.

11. Receiver according to Claim 10, **characterized in that** the said analysis means include means (88) of comparing the difference _n -_n-1_ with a threshold S.

**12.** Receiver according to Claim 11, **characterized in that** the said threshold S equals rd, where r represents an estimate of the attenuation of the channel.

**13.** Receiver according to Claim 12, **characterized in that** r equals _n.

Fig. 1

Fig. 2

Fig. 3

Fig. 4

signal 1 →| CODAGE CANAL 1 |→| ENTRELA CEMENT F.T |→| CALCUL DE LA PHASE |→

$d_n$

⌣51  ⌣53  ⌣55  58⌣ | MODULA TION |→

52⌣  54⌣  56⌣  57⌣

signal 2 →| CODAGE CANAL 2 |→| ENTRELA CEMENT F.T |→| CODAGE PAR TRANSITION |→| CALCUL DU MODULE |→

$a_n$

## Fig. 5

| D |

$z_{n-1}$  ⌣62

$y_n$ →| ⊗ |  $z_n$

⌣61  | ⊞ |→ $x_n = (1 \pm d).z_n$

66⌣

65⌣  | ⊗ |

63⌣

$a_n$ →| CODAGE PAR TRANSITION |  $\pm d$

64⌣

| D |

## Fig. 6

Zn-1 → D 62

yn → ⊗ 61 → Zn

72
1+d → ⊠ → 71 ⊗ → xn = (1±d).Zn

1-d →

sel

73
an → ⊕

74 D

Fig. 7

81 → 82 RECEP TION → I ~ DEMOD. DE PHASE 83 → DESENTRE LACEMENT F.T 84 → DECODAGE 1 85 → 86

II ~ → 87 RECUP. DU MODULE → 88 DIFFERENCE ET SEUILLAGE → 89 DESENTRE LACEMENT F.T → 810 DECODAGE 2 → 811

Fig. 8